(19) **Europäisches Patentamt**
**European Patent Office**
**Office européen des brevets**

(11) **EP 1 882 335 B1**

(12) **EUROPEAN PATENT SPECIFICATION**

(45) Date of publication and mention
of the grant of the patent:
**29.08.2012 Bulletin 2012/35**

(51) Int Cl.:
**H04W 74/08** *(2009.01)*

(21) Application number: **06726999.3**

(86) International application number:
**PCT/GB2006/001624**

(22) Date of filing: **03.05.2006**

(87) International publication number:
**WO 2006/120388 (16.11.2006 Gazette 2006/46)**

(54) **A METHOD OF CONTROLLING INTERFERENCE BETWEEN COMMUNICATION TERMINALS**

VERFAHREN ZUR KONTROLLE VON STÖRUNGEN ZWISCHEN
KOMMUNIKATIONSENDGERÄTEN

PROCEDE DE CONTROLE DES INTERFERENCES ENTRE DES TERMINAUX DE
COMMUNICATION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **12.05.2005  GB 0509652**

(43) Date of publication of application:
**30.01.2008  Bulletin 2008/05**

(73) Proprietor: **Nokia Siemens Networks GmbH & Co.
KG
81541 München (DE)**

(72) Inventors:
• **HULBERT, Anthony Peter
Southampton, Hampshire SO16 3DF (GB)**
• **HEYES, Christopher
Southampton, Hampshire SO15 5BU (GB)**

(74) Representative: **Bruglachner, Thomas E. et al
Nokia Siemens Networks GmbH & Co. KG
CEF CTO IPR / Patent Administration
80240 Munich (DE)**

(56) References cited:
**WO-A-2005/036909     US-A- 6 058 106
US-A1- 2002 018 446**

## Description

This invention relates to a method of controlling interference between communication terminals, in particular where spectrum sharing is required, such as for wireless local area network (LAN) systems.

There is considerable interest in the generation of protocols that allow radio links to co-exist in a so-called 'spectrum commons'. It is well understood that without some method for controlling the access to the radio medium through an appropriate medium access control (MAC) protocol, as more and more radio links or systems share spectrum, congestion is inevitable and may become catastrophic. One example of a spectrum commons is the 2.4 GHz unlicensed industrial, scientific and medical (ISM) band. Here we see that many systems, such as Wifi 802.11, Bluetooth and Zigbee all share this spectrum.

Many of the above systems already operate some kind of MAC protocol that is 'polite' in the sense that it may defer to other users of the spectrum. However such existing protocols are generally designed for optimal control of interference *within* a system rather than *between* systems. Any sharing of the spectrum that arises through the operation of at least some of these protocols may be, at best, fortuitous. Thus substantial attention is being paid to the generation of novel polite protocols that facilitate sharing of the spectrum more efficiently. Existing protocols and assumptions about use of current unlicensed bands tend to work on the premise of short range communications, often crudely enforced by establishing fixed limits on transmission power. Another system relies on knowing when one terminal is transmitting, making assumptions about when another terminal in a pair will transmit, then fitting in transmissions from outside the pair, at a time when neither is assumed to be transmitting. However, this is still a rather hit and miss approach. Even when spectrum sharing between different systems is considered, for example in order to better use the spectrum without interfering with legacy users, there is still a need for central monitoring and control of nodes on a network.

US6058106 describes peer to peer communication via an access point device which allocates a block assignment in response to a request from a source device to transmit and provides feedback to the source device as to whether or not a block has been received at a destination device, so that the source can resend that block or send the next block accordingly.

In accordance with the present invention, a method of controlling interference between communication terminals comprises sending a notification of a desire to transmit a transmission over a wireless network from a first terminal; determining whether any terminal in the process of receiving has sent an objection in response to the notification; sending the transmission if no objection is received; and modifying the transmission if an objection is received.

The present invention avoids the need for central control of transmissions by the transmitting terminal sending a request which lets any other terminal in the process of receiving, whether currently receiving or expecting to receive imminently, know of its intentions and gives that other terminal an opportunity to object to the proposed transmission. The terminals may, or may not be heterogeneous and operating in a spectrum commons.

The present invention enables communications links to be established that guarantee operation without interfering with other radio links, by first allowing the parties to those other links to determine any possible interference problems.

Preferably, the notification includes an identifier of a destination of the transmission.

If the destination is receiving, it may send an objection or ignore the notification, but preferably, the destination sends an acknowledgment to the first terminal.

Preferably, normal data transmissions are encoded using forward error correction (FEC) and interleaving.

Preferably, spread spectrum is used to encode any one of the notification, objection or acknowledgement.

Preferably, discrimination between a plurality of encoded objections is applied by means of random or pseudo-random time offsets.

There are various methods of encoding, but preferably, any one of the notification, objections, or acknowledgement are encoded using any one of short spreading codes, long spreading codes, or short codes overlaid with long codes.

Preferably, the short codes are Walsh-Hadamard codes.

Although, all codes could be selected at random, preferably, a single specific code is reserved for one or each of the notification and acknowledgment and the objection is selected at random from all non-reserved codes.

By reserving specific codes for each of the notification and acknowledgment, it is possible to identify the notification and acknowledgement implicitly by virtue of the code being used.

Preferably, the format includes the use of one of differential modulation; multiple ambles; or pilot symbols.

Although, multiple ambles could be provided e.g. as mid-ambles in the message, preferably, a pre-amble and post-amble are applied to the data transmissions.

This ensures that if an objection is sent anywhere in a message, the carrier phase of the remaining part of the message can still be determined.

Preferably, a destination substitutes erasures for received modulation symbols which have become unavailable due to carrying out a transmission during reception of a message.

This allows methods, such as fountain codes, to be used which rely on a certain number of correct sub-packets being received and can simply ignore those with erasures and carry on until sufficient correct sub-packets have been received to reconstruct the original message.

Preferably, the destination comprises one of a terminal, a group of terminals, or a network.

The first terminal might send to another specific terminal, or it might wish to send a broadcast within its own network without interfering with other networks.

Preferably, the first terminal sends its notification at full power.

This ensures that the notification has the highest chance of getting to its desired destination first time. However, once a terminal has been communicated with, then the first terminal can remember the estimated path loss and send its notification at a lower level, to minimise overall interference.

Preferably, the notification includes an address of the first terminal; an address of the destination; a power level used to send the notification; and a received level of interference at the first terminal at the time of sending the notification.

Preferably, the power level and interference level are encoded as binary sequences representative of a transmitted power and interference at the first terminal.

Preferably, the acknowledgement is sent using power control.

The power used to send the acknowledgement is controlled to be the minimum necessary, ensuring that only sufficient power is used to acknowledge, helping to keep down unnecessary interference.

Preferably, the acknowledgement includes a minimum transmission power level at the transmitter required for the destination to receive a communication.

This gives an indication from a destination terminal of the transmission power level required for the transmission to be successful, so if it cannot send at that level, it can choose not to send at all, rather than waste resources, or else the first terminal modifies the transmission rate sufficiently to allow successful data deliver at the available power level.

Preferably, the acknowledgment includes an indication of when a current message being sent to the destination from a terminal other than the first terminal will finish and transmission can begin.

The acknowledgement can be adapted to take account of the destination's current situation, so that the first terminal does not simply give up trying to transmit if the destination is currently busy.

There may be circumstances in which there is already a large amount of interference and acknowledgments and objections would need to be sent on high power to be heard, so preferably, the first terminal sets an interference threshold above which it will not send a notification.

Preferably, the threshold is an adaptive threshold.

This gives more flexibility, to take account of particular conditions, rather than setting a fixed threshold.

Preferably, the first terminal logs success rates for transmission at varying levels of interference, in order to determine a power level to be used for a future notification.

This increases the likelihood of a notification being acknowledged first time and reduces the likelihood of objection.

Preferably, the modifying comprises reducing the transmission power to the lowest maximum indicated in all objections received.

Provided that this maximum is above the minimum level required by the destination to receive successfully, the transmission can still go ahead despite objections. Thus, the present invention allows higher transmit powers at times where there is guaranteed non-interference between radio links, i.e. no objections are received, but can reduce power to address objections if required.

There will be certain conditions in which the modifying applied by the first terminal is to cancel the transmission, because the circumstances are so unsuitable, but preferably, if the interference cannot be brought down to an acceptable level, then the modifying comprises applying a delay and resending the notification to ascertain whether the transmission can be sent.

Alternatively, the modifying comprises reducing the transmission rate over the air.

Since this invention is directed at co-operative behaviour, it should not be possible for a terminal to permanently prevent another one from transmitting, so preferably, a limit is set on how often within a given time period a terminal may send an objection to another terminal and prevent transmission.

The present invention makes sharing of a radio medium fairer by allowing any interested party to influence the transmission behaviour of another party, but can prevent an interested party behaving unreasonably.

In this case, preferably, the modifying comprises adapting the transmit power level to a level indicated by the destination in its acknowledgement and transmitting at that level.

This addresses situations when the level indicated by the destination is below the maxima set in any objections and also when the number of successive objections has exceeded a permitted value.

Preferably, the objection includes a maximum acceptable transmission power at the first terminal to avoid interfering with an objecting terminal.

Although, this method can be used for intra-system communication, preferably, the objection is received from a terminal in a system different from the system in which the first terminal and the destination operate.

Preferably, the transmissions are direct sequence spread spectrum transmissions.

An example of a method of communication in accordance with the present invention will now be described with reference to the accompanying drawings in which:

Figures 1 to 4 illustrate a first embodiment of the present invention, wherein :

Figure 1 shows data sent from TS1 To TS2;
Figure 2 shows a TS sending a REQ
Figure 3 shows a TS sending a REP message and a TS sending a NCTS message
Figure 4 shows a TS interpreting data contained in REP and NCTS messages.

The present invention addresses the problems caused by a number of terminal stations (TS) all operating using a shared block of radio spectrum. The TSs may be part of the same communication system or they may belong to different communication systems, such as wireless LAN, Bluetooth or cellular mobile systems. Any of the terminals may wish to share data with any of the others, so the invention is applicable to dealing with both inter-system interference and intra-system interference, but in most cases the issue is likely to be intersystem interference, rather than communication between dual capable devices. Some of the TSs may be fixed and connected to fixed infrastructure via some backhaul connection. That is, they may operate as access points (AP). However, apart from some differences in the levels of traffic carried and the operation of higher layer (i.e. higher than layer 2) protocols, these do not operate in a different way from other TSs.

Generally, it is assumed that data are communicated between TSs in the form of packets of finite duration and that each TS has an address that is known to itself and to any other TS that might wish to send data to it. Higher layer protocols that can exchange such address data are well known in the art, such as transmission control protocol/internet protocol (TCP/IP). In addition, further higher layer protocols may arrange for the transfer of data over store and forward links creating a so-called 'mesh' network. Here again, the provision of well known routing algorithms, such as ad-hoc on-demand distance vector routing (AODV), operating at higher layers may be applied. For the purpose of this invention, any reference to sending a packet from one TS to another refers to layer 1 and 2 operations only.

The examples of the present invention described below refer to defined special control packets. These special control packets are a request (REQ), not clear to send (NCTS) and that the destination has heard the request (REP). The control packets are transmitted using some form of spread spectrum to allow operation in high interference environments and/or to allow the reception of multiple packets contemporaneously. The preferred method of spread spectrum is direct sequence spread spectrum (DSSS).

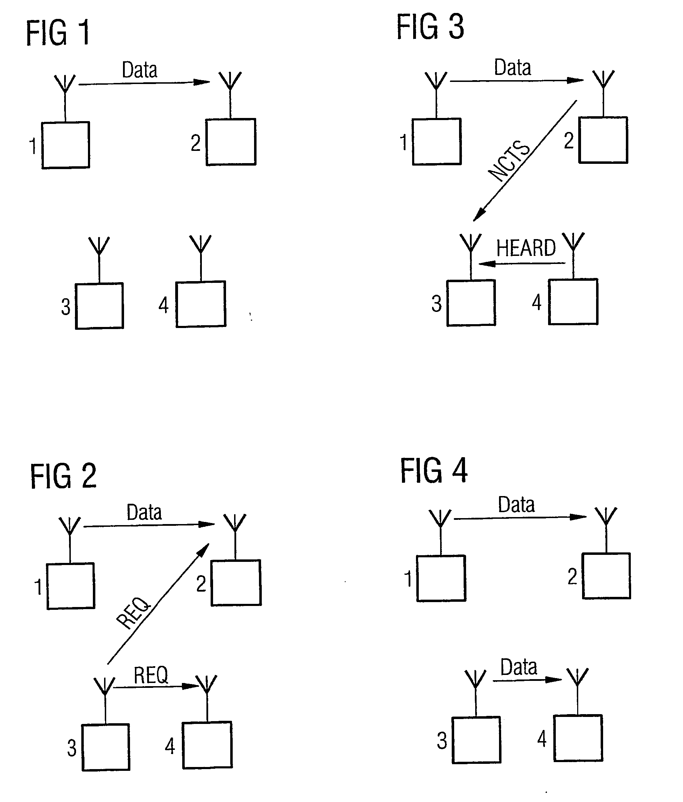

Fig. 1 shows four TSs 1 to 4. Data is currently being transmitted from TS 1 to TS 2 over a radio link 5 and TS 3 has data that it wishes to send to TS 4. Accordingly, TS 3 broadcasts a REQ message as illustrated in Fig. 2. Any terminal station wanting to send a packet to another TS sends a REQ initially at full power using DSSS containing its own address (some or all of the addresses may be shortened temporary addresses to save on bandwidth where appropriate as well known in the art), the destination address, an encoding of the power used to transmit the REQ and encoding of the current received level of interference at the transmitting TS.

In response, TS 4, the destination, sends a REP message as shown in Fig. 3 and TS 2 broadcasts a NCTS message. The destination TS 4 measures the received power and, based on reciprocity, signals back a REP message at a suitable power and with a message to indicate the power needed just to reach that destination with acceptable margin. Other receivers in the area also listen to the REQ and, if it causes them interference (because it is strong enough to *and* because they are receiving something they *want* to receive) they send back a NCTS message also using DSSS at the minimum power needed to reach the originator, containing information saying the maximum power that the originator is allowed to transmit without causing unacceptable interference.

Finally, as shown in Fig. 4, TS 3 interprets the data contained in the REP and NCTS messages. It notes the maximum power that it is allowed to transmit from the NCTS message. It also notes the power that is needed to reach TS 4 from the REP message. It determines, for this particular example, that the power needed to reach TS 4 is less than or equal to the power limit established from the NCTS message, so TS 3 is free to transmit to TS 4. It can be seen from Fig. 4 that contemporaneous transmission of data between TS 1 and TS 2 and between TS 3 and TS 4 has been facilitated. Thus spatial re-use of frequency has been made possible without risking compromising operation of the first link. As well as applying to communications between different systems which might otherwise interfere, this method is flexible enough that it can be used to reduce interference within a system, so reducing the degree of central control required, or to deal with the problem of new users in an area of the spectrum already allocated to legacy users, who are no longer fully utilising their available bandwidth.

Normal communication bursts are designed to have enough coding or interleaving that the receivers can afford to break off from receiving the burst in order to send a NCTS message. When a TS breaks off from receiving its current wanted message in order to send an NCTS, then temporarily it must suspend its receiving operation. The receiver inserts erasures into the data buffer for later processing in the de-interleaver and forward error correction error decoder. After completion of transmission of the NCTS, the receiver resumes reception operation. For any practical receiver, it is highly unlikely that the local oscillator will be carrier phase coherent, after transmission of the NCTS, with its operation before transmission of the NCTS. Thus the transmission format used for the packets within the system must be such that reception is possible *without* such coherence. This can be achieved in a number of ways, for example, by using non-coherent modulation such a differential phase modulation, frequency shift keying (FSK), minimum shift keying (MSK), etc. Alternatively, several 'ambles' can be provided within a burst - typically a burst in a normal system may have a preamble <u>or</u> a mid-amble, but there is no reason, apart from overhead, why more than one 'amble' cannot be provided. A preferred arrangement of multiple ambles would be to have a pre-amble and a post-amble, so that stopping reception to transmit at any point in the burst does not prevent the phase being determined in each part. If multiple mid-ambles were used, the transmission would have to be at a point before the last amble. Another option is to use pilot symbol assisted modulation based on the relatively frequent insertion of symbols with known carrier phase or amplitude. The last of these options is preferred. This would, for example, be appropriate for systems where the modulation is based on orthogonal frequency division multiplex (OFDM) which is becoming increasingly popular.

If fountain codes are used for messages which a terminal that sends a NCTS objection is receiving when the notification of a REQ is sent out, then it is best if that terminal transmits its objection within an integer number of sub-packets, preferably one, thereby maximising the number of sub-packets that are successfully received and its chances of interpreting the received message correctly.

The REP message can optionally contain digitally encoded data representing both of two power levels i.e. the power that the originator would need to use to reach the destination in the current interference environment; and the power that the originator would need to use to reach the destination when there is no interference. In addition, if a destination receives a REQ whilst it is receiving a wanted transmission from *another* TS then it sends a modified REP message indicating this. This modified REP message can also contain the expected remaining time for receiving the current message.

The originator collects any REP and/or NCTS messages. If the originator hears only the REP, then it transmits to the destination at the minimum power specified in the REP message. If the originator also hears one or more NCTS messages then it computes the maximum power that is permitted for transmission, based on the minimum of the constraints that that have been received. If the maximum permissible power is greater than or equal to the minimum power requirement communicated in the REP message, then the TS will transmit at this minimum power. If not then the TS will perform a backoff (possibly random) and try again. Alternatively, the TS may decide to transmit using a reduced data transmission rate in order to ensure that the required transmitted power *does* fall below the limit of acceptable interference.

A TS can build up a table of the minimum powers needed to reach other specific TS's when those TS's have no interference and may use these powers (or slightly higher to allow for fading or movement) as their initial levels for sending the REQ. This is intended to reduce the incidence of NCTS transmissions.

In order to enforce fairness a maximum limit can be set on the number of times a given TS may send an NCTS to any given TS in succession. Alternatively, a TS is allowed to transmit a packet to another TS, ignoring NCTS's after a certain time or after a certain number of NCTS's have been received (either from a particular TS or from any TS's).

Suppose that a REQ message sent by a TS with address *Add* has the following fields: *Add,* transmit power at that address - TxPwr(*Add*), received interference at that address - RxInt(*Add*), address of the destination - *Dest.* Let us assume that TxPwr and RxInt are encoded as decibel values. When the message is received at a TS other than the one with address *Dest*, if that TS is not currently receiving then that TS will ignore the transmission. Also, if the TS is receiving, but the REQ is not causing unacceptable interference, then that TS will ignore the transmission. However, if the REQ is received at such a level that, if continued in time, it would cause unacceptable interference a NCTS message is generated by that TS.

The non-destination receiving TS measures the received signal strength of the REQ message - RxLev (REQ). It can then use this to estimate the path loss (PL) from the TS originating the REQ and itself, where:

$$PL = \mathrm{TxPwr}(Add) - \mathrm{RxLev}(\mathrm{REQ}).$$

This TS can compute the maximum acceptable interference power based on the known required protection ratio for receiving a data burst - g(Data) and the known received signal level of the current data signal - RxLev(Data). Thus, the maximum acceptable interference level MaxInt is:

$$\mathrm{MaxInt} = \mathrm{RxLev}(\mathrm{Data}) - g(\mathrm{Data}) .$$

Using this, the TS can compute the maximum allowed transmitted power MaxTx for the originator of the REQ as:

$$\mathrm{MaxTx} = \mathrm{MaxInt} + \mathrm{PL}.$$

The value MaxTx is inserted into one of the fields of the NCTS message. The NCTS message is transmitted with power set as RxInt(*Add*) + g(NCTS) + PL, where *g*(NCTS) is the protection ratio (which may be negative in decibels due to spreading gain) needed for reception of an NCTS message.

In addition to the above, the protocol can be extended to include an element of the well known 'listen before transmit' protocol. This protocol has limitations because it involves sensing the radio environment of the would-be spectrum sharer, rather than the receiver of the existing link. However, it is nevertheless likely that, in a significant proportion of cases, the appearance of strong interference at the would-be sharer's site *does* indicate that the channel is in use in the area. It could, therefore, be beneficial to introduce an element of 'listen before transmit' to the protocol in which the reception signal level threshold for *not* sending a REQ transmission is higher than in a conventional listen before transmit' protocol. The tradeoff in setting this threshold is between, on the one hand, wasting possible useful opportunities for spectrum sharing if the threshold is set too low and on the other hand, excessive interference generated from the exchange of too many REQ, REP and NCTS message that lead to no useful data transfer. The optimum threshold level is a compromise between these two effects.

The threshold can be set adaptively using measurements of NCTSs heard and by comparing a ratio between numbers of REQs sent to numbers of data packets delivered against a preferred threshold. It is also useful here because, if the received signal strength at the originator is high then more power will need to be transmitted to reach it with REP and NCTS messages.

## Claims

1. A method of controlling interference between communication terminals (1, 2, 3, 4), **characterized by** the method comprising sending a notification (REQ) of a desire to transmit a transmission over a wireless network from a first terminal (3); determining whether any terminal in the process of receiving has sent an objection (NCTS) in response to the notification; sending the transmission if no objection is received; and modifying the transmission if an objection is received.

2. A method according to claim 1, wherein the notification (REQ) includes an identifier of a destination (4) of the transmission.

3. A method according to claim 2, wherein the destination (4) sends an acknowledgment (HEARD) to the first terminal (3).

4. A method according to any preceding claim, wherein normal data transmissions are encoded using forward error correction, FEC, and interleaving.

5. A method according to any of claims 1 to 4, wherein spread spectrum is used to encode any one of the notification, objection or acknowledgement.

6. A method according to claim 5, wherein discrimination between a plurality of encoded objections is applied by means of random or pseudo-random time offsets.

7. A method according to claim 5, wherein any one of the notification (REQ), objections (NCTS), or acknowledgement (HEARD) are encoded using any one of short spreading codes, long spreading codes, or short codes overlaid with long codes.

8. A method according to claim 7, wherein the short codes are Walsh-Hadamard codes.

9. A method according to claim 7 or claim 8, wherein a single specific code is reserved for one or each of the notification (REQ) and acknowledgment (HEARD) and the objection (NCTS) is selected at random from all non-reserved codes.

10. A method according to any preceding claim, wherein the communication includes the use of a format of one of differential modulation; multiple ambles; or pilot symbols.

11. A method according to claim 10, wherein a pre-amble and post-amble are applied to the data transmissions.

12. A method according to any preceding claim, wherein a destination (4) substitutes erasures for received modulation symbols which have become unavailable due to carrying out a transmission during reception of a message.

13. A method according to claim 2, wherein the destination (4) comprises one of a terminal, a group of terminals, or a network.

14. A method according to any preceding claim, wherein the first terminal (3) sends its notification (REQ) at full power.

15. A method according to any preceding claim, wherein the notification (REQ) includes an address of the first terminal (3); an address of the destination (4); a power level used to send the notification; and a received level of interference at the first terminal at the time of sending the notification.

16. A method according to claim 15, wherein the power level and interference level are encoded as binary sequences representative of a transmitted power and interference at the first terminal (3).

17. A method according to claim 3, wherein the acknowledgement (HEARD) is sent using power control.

**18.** A method according to claim 3, wherein the acknowledgement (HEARD) includes a minimum transmission power level at the transmitter (3) required for the destination (4) to receive a communication.

**19.** A method according to claim 3, wherein the acknowledgment (HEARD) includes an indication of when a current message being sent to the destination (4) from a terminal other than the first terminal (3) will finish and transmission can begin.

**20.** A method according to any preceding claim, wherein the first terminal (3) sets an interference threshold above which it will not send a notification (REQ).

**21.** A method according to claim 20, wherein the threshold is an adaptive threshold.

**22.** A method according to any preceding claim, wherein the first terminal (3) logs success rates for transmission at varying levels of interference, in order to determine a power level to be used for a future notification.

**23.** A method according to any preceding claim, wherein the modifying comprises reducing the transmission power to the lowest maximum indicated in all objections received.

**24.** A method according to any of claims 1 to 22, wherein the modifying comprises applying a delay and resending the notification (REQ) to ascertain whether the transmission can be sent.

**25.** A method according to any of claims 1 to 22, wherein the modifying comprises reducing the transmission rate over the air.

**26.** A method according to any preceding claim, wherein a limit is set on how often within a given time period a terminal (2) may send an objection to another terminal (3) and prevent transmission.

**27.** A method according to any of claims 1 to 22, wherein the modifying comprises adapting the transmit power level to a level indicated by the destination (4) in its acknowledgement and transmitting at that level.

**28.** A method according to any preceding claim, wherein the objection (NCTS) includes a maximum acceptable transmission power at the first terminal (3) to avoid interfering with an objecting terminal (2).

**29.** A method according to claim 2, wherein the objection (NCTS) is received from a terminal in a system different from the system in which the first terminal (3) and the destination (4) operate.

**30.** A method according to any preceding claim, wherein the transmissions are direct sequence spread spectrum transmissions.

**Patentansprüche**

**1.** Verfahren zur Überwachung von Störungen zwischen Kommunikationsendstellen (1, 2, 3 ,4), **dadurch gekennzeichnet, dass** das Verfahren Senden einer Benachrichtigung (REQ) über einen Wunsch zum Übertragen einer Übertragung über ein drahtloses Netz von einer ersten Endstelle (3); Feststellen, ob eine Endstelle im Empfangsvorgang einen Einwand (NCTS) als Antwort auf die Benachrichtigung gesandt hat; Senden der Übertragung, wenn kein Einwand empfangen worden ist; und Modifizieren der Übertragung, wenn ein Einwand empfangen worden ist, umfasst.

**2.** Verfahren nach Anspruch 1, wobei die Benachrichtigung (REQ) einen Identifikator eines Ziels (4) der Übertragung enthält.

**3.** Verfahren nach Anspruch 2, wobei das Ziel (4) eine Bestätigung (HEARD) an die erste Endstelle (3) sendet.

**4.** Verfahren nach einem der vorhergehenden Ansprüche, wobei normale Datenübertragungen unter Anwendung von Vorwärtsfehlerkorrektur (FEC) und Interleaving codiert werden.

**5.** Verfahren nach einem der Ansprüche 1 bis 4, wobei Frequenzspreizung für die Codierung einer Benachrichtigung, eines Einwands oder einer Bestätigung angewandt wird.

**6.** Verfahren nach Anspruch 5, wobei eine Differenzierung zwischen mehreren codierten Einwänden mithilfe von Zufalls- oder Pseudozufalls-Zeitversätzen angewandt wird.

**7.** Verfahren nach Anspruch 5, wobei eine Benachrichtigung (REQ), ein Einwand (NCTS) oder eine Bestätigung (HEARD) durch Anwendung von entweder kurzen Spreizcodes, langen Spreizcodes oder mit langen Codes überlagerten kurzen Codes codiert wird bzw. werden.

**8.** Verfahren nach Anspruch 7, wobei es sich bei den kurzen Codes um Walsh-Hadamard-Codes handelt.

**9.** Verfahren nach Anspruch 7 oder 8, wobei ein einzelner, spezifischer Code für eine oder jede Benachrichtigung (REQ) und Bestätigung (HEARD) reserviert ist und der Einwand (NCTS) zufallsweise aus allen nicht reservierten Codes ausgewählt wird.

**10.** Verfahren nach einem der vorhergehenden Ansprüche, wobei die Kommunikation die Anwendung eines Formats von Differenzialmodulation, Mehrfachpässen oder Vorsteuersymbolen aufweist.

**11.** Verfahren nach Anspruch 10, wobei ein Vorpass und Nachpass auf die Datenübertragungen angewandt wird.

**12.** Verfahren nach einem der vorhergehenden Ansprüche, wobei ein Ziel (4) Löschungen für empfangene Modulationssymbole ersetzt, die aufgrund der Durchführung einer Übertragung während des Empfangs einer Nachricht unzugänglich geworden sind.

**13.** Verfahren nach Anspruch 2, wobei das Ziel (4) eine Endstelle, eine Gruppe von Endstellen oder ein Netz umfasst.

**14.** Verfahren nach einem der vorhergehenden Ansprüche, wobei die erste Endstelle (3) ihre Benachrichtigung (REQ) mit voller Leistung sendet.

**15.** Verfahren nach einem der vorhergehenden Ansprüche, wobei die Benachrichtigung (REQ) eine Adresse der ersten Endstelle (3); eine Adresse des Ziels (4); einen für das Senden der Nachricht benutzten Leistungspegel; und einen an der ersten Endstelle zum Zeitpunkt des Sendens der Benachrichtigung empfangenen Störungspegel enthält.

**16.** Verfahren nach Anspruch 15, wobei der Leistungspegel und der Störungspegel als binäre Sequenzen codiert sind, die repräsentativ für eine übertragene Leistung und Störung an der ersten Endstelle (3) sind.

**17.** Verfahren nach Anspruch 3, wobei die Bestätigung (HEARD) mit Anwendung von Leistungssteuerung gesandt wird.

**18.** Verfahren nach Anspruch 3, wobei die Bestätigung (HEARD) einen Mindestübertragungsleistungspegel am Sender (3) aufweist, der erforderlich ist, damit das Ziel (4) eine Kommunikation empfängt.

**19.** Verfahren nach Anspruch 3, wobei die Bestätigung (HEARD) eine Anzeige darüber aufweist, wenn eine aktuelle Mitteilung, die von einer anderen als der ersten Endstelle (3) an das Ziel (4) gesandt wird, endet und die Übertragung beginnen kann.

**20.** Verfahren nach einem der vorhergehenden Ansprüche, wobei die erste Endstelle (3) einen Störungsschwellenwert festlegt, oberhalb dessen sie keine Benachrichtigung (REQ) sendet.

**21.** Verfahren nach Anspruch 20, wobei der Störungsschwellenwert ein adaptiver Schwellenwert ist.

**22.** Verfahren nach einem der vorhergehenden Ansprüche, wobei die erste Endstelle (3) Erfolgsraten für die Übertragung auf unterschiedlichen Störungspegeln protokolliert, um einen Leistungspegel festzulegen, der bei einer zukünftigen Benachrichtigung zu benutzen ist.

**23.** Verfahren nach einem der vorhergehenden Ansprüche, wobei das Modifizieren ein Reduzieren der Übertragungsleistung auf den niedrigsten Höchstwert umfasst, der bei allen empfangenen Einwänden angezeigt ist.

**24.** Verfahren nach einem der Ansprüche 1 bis 22, wobei das Modifizieren ein Anwenden einer Verzögerung und ein erneutes Senden der Benachrichtigung (REQ) umfasst, um sicherzustellen, ob die Übertragung gesendet werden kann.

**25.** Verfahren nach einem der Ansprüche 1 bis 22, wobei das Modifizieren ein Reduzieren der Funkübertragungsrate aufweist.

**26.** Verfahren nach einem der vorhergehenden Ansprüche, wobei eine Grenze dafür festgelegt wird, wie oft während eines vorgegeben Zeitraums eine Endstelle (2) einen Einwand an eine andere Endstelle (3) senden und eine Übertragung verhindern kann.

**27.** Verfahren nach einem der Ansprüche 1 bis 22, wobei das Modifizieren ein Anpassen des Übertragungsleistungspegels an einen Pegel aufweist, der vom Ziel (4) in seiner Bestätigung und Übertragung bei diesem Pegel angegeben worden ist.

**28.** Verfahren nach einem der vorhergehenden Ansprüche, wobei der Einwand (NCTS) eine höchstzulässige Übertragungsleistung an der ersten Endstelle (3) aufweist, um ein Stören einer einwendenden Endstelle (2) zu vermeiden.

**29.** Verfahren nach Anspruch 2, wobei der Einwand (NCTS) von einer Endstelle in einem anderen System als dem, in dem die erste Endstelle (3) und das Ziel (4) betrieben werden, empfangen wird.

**30.** Verfahren nach einem der vorhergehenden Ansprüche, wobei es sich bei den Übertragungen um Sequenz-Frequenzspreizungsübertragungen handelt.

**Revendications**

**1.** Un procédé de contrôle de brouillage entre des terminaux de communication (1, 2, 3, 4), **caractérisé en ce que**

le procédé comprend l'envoi d'une notification (REQ) d'un souhait de transmettre une transmission par l'intermédiaire d'un réseau sans fil à partir d'un premier terminal (3), la détermination si tout terminal en cours de réception a envoyé une objection (NCTS) en réponse à la notification, l'envoi de la transmission si aucune objection n'est reçue, et la modification de la transmission si une objection est reçue.

2. Un procédé selon la revendication 1, dans lequel la notification (REQ) comprend un identifiant d'une destination (4) de la transmission.

3. Un procédé selon la revendication 2, dans lequel la destination (4) envoie un accusé de réception (HEARD) au premier terminal (3).

4. Un procédé selon l'une quelconque des revendications précédentes, dans lequel des transmissions de données normales sont codées au moyen d'une correction d'erreur sans voie de retour, FEC, et d'un entrelacement.

5. Un procédé selon l'une quelconque des revendications 1 à 4, dans lequel un spectre étalé est utilisé pour coder l'un quelconque parmi la notification, l'objection ou l'accusé de réception.

6. Un procédé selon la revendication 5, dans lequel une discrimination entre une pluralité d'objections codées est appliquée au moyen de décalages temporels aléatoires ou pseudo-aléatoires.

7. Un procédé selon la revendication 5, dans lequel l'un quelconque parmi la notification (REQ), les objections (NCTS) ou l'accusé de réception (HEARD) est codé au moyen de l'un quelconque parmi codes d'étalement courts, codes d'étalement longs ou codes courts superposés à des codes longs.

8. Un procédé selon la revendication 7, dans lequel les codes courts sont des codes Walsh-Hadamard.

9. Un procédé selon la revendication 7 ou 8, dans lequel un code spécifique unique est réservé à l'un ou chacun parmi la notification (REQ) et l'accusé de réception (HEARD), et l'objection (NCTS) est sélectionnée de manière aléatoire parmi tous les codes non réservés.

10. Un procédé selon l'une quelconque des revendications précédentes, dans lequel la communication comprend l'utilisation d'un format parmi modulation différentielle, ambules multiples ou symboles pilotes.

11. Un procédé selon la revendication 10, dans lequel un préambule et un post-ambule sont appliqués aux transmissions de données.

12. Un procédé selon l'une quelconque des revendications précédentes, dans lequel une destination (4) substitue des effacements à des symboles de modulation reçus qui sont devenus indisponibles du fait de l'exécution d'une transmission au cours de la réception d'un message.

13. Un procédé selon la revendication 2, dans lequel la destination (4) comprend un élément parmi un terminal, un groupe de terminaux ou un réseau.

14. Un procédé selon l'une quelconque des revendications précédentes, dans lequel le premier terminal (3) envoie sa notification (REQ) à pleine puissance.

15. Un procédé selon l'une quelconque des revendications précédentes, dans lequel la notification (REQ) comprend une adresse du premier terminal (3), une adresse de la destination (4), un niveau de puissance utilisé pour envoyer la notification et un niveau de brouillage reçu sur le premier terminal au moment de l'envoi de la notification.

16. Un procédé selon la revendication 15, dans lequel le niveau de puissance et le niveau de brouillage sont codés sous la forme de séquences binaires représentatives d'une puissance transmise et d'un brouillage sur le premier terminal (3).

17. Un procédé selon la revendication 3, dans lequel l'accusé de réception (HEARD) est envoyé au moyen d'une commande de puissance.

18. Un procédé selon la revendication 3, dans lequel l'accusé de réception (HEARD) comprend un niveau de puissance de transmission minimal au niveau de l'émetteur (3) nécessaire à la destination (4) pour recevoir une communication.

19. Un procédé selon la revendication 3, dans lequel l'accusé de réception (HEARD) comprend une indication du moment où un message en cours envoyé à la destination (4) à partir d'un terminal autre que le premier terminal (3) se terminera et où la transmission pourra débuter.

20. Un procédé selon l'une quelconque des revendications précédentes, dans lequel le premier terminal (3) définit un seuil de brouillage au-dessus duquel il n'envoie pas de notification (REQ).

21. Un procédé selon la revendication 20, dans lequel le seuil est un seuil adaptatif.

22. Un procédé selon l'une quelconque des revendications précédentes, dans lequel le premier terminal (3) enregistre des taux de succès de transmission à des niveaux de brouillage variables afin de déterminer un niveau de puissance à utiliser pour une notification future.

**23.** Un procédé selon l'une quelconque des revendications précédentes, dans lequel la modification comprend la réduction de la puissance de transmission au niveau le plus bas maximal indiqué dans toutes les objections reçues.

**24.** Un procédé selon l'une quelconque des revendications 1 à 22, dans lequel la modification comprend l'application d'un retard et le renvoi de la notification (REQ) de façon à s'assurer que la transmission peut être envoyée.

**25.** Un procédé selon l'une quelconque des revendications 1 à 22, dans lequel la modification comprend la réduction de la vitesse de transmission par voie hertzienne.

**26.** Un procédé selon l'une quelconque des revendications précédentes, dans lequel une limite est définie relative au nombre de fois que, dans une période de temps donnée, un terminal (2) peut envoyer une objection à un autre terminal (3) et empêcher une transmission.

**27.** Un procédé selon l'une quelconque des revendications 1 à 22, dans lequel la modification comprend l'adaptation du niveau de puissance de transmission à un niveau indiqué par la destination (4) dans son accusé de réception et une transmission à ce niveau.

**28.** Un procédé selon l'une quelconque des revendications précédentes, dans lequel l'objection (NCTS) comprend une puissance de transmission maximale acceptable sur le premier terminal (3) de façon à éviter un brouillage avec un terminal présentant une objection (2).

**29.** Un procédé selon la revendication 2, dans lequel l'objection (NCTS) est reçue à partir d'un terminal dans un système différent du système dans lequel le premier terminal (3) et la destination (4) fonctionnent.

**30.** Un procédé selon l'une quelconque des revendications précédentes, dans lequel les transmissions sont des transmissions à spectre étalé à séquence directe.

# FIG 1

# FIG 3

# FIG 2

# FIG 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6058106 A